# NEUE EUROPÄISCHE PATENTSCHRIFT

(11) **EP 2 964 381 B2**
(45) Veröffentlichungstag und Bekanntmachung des Hinweises auf die Entscheidung über den Einspruch: **27.05.2026**
(45) Hinweis auf die Patenterteilung: 09.12.2020
(21) Anmeldenummer: 14719608.3
(22) Anmeldetag: 04.03.2014
(51) Int. Cl.: B01J 31/04, B01J 31/12, C09D 183/04, C09D 183/12, C08L 83/04

(54) **ZUSAMMENSETZUNG ZUR HERSTELLUNG VON SILICONKAUTSCHUKMASSEN**
CATALYST FOR THE CROSS-LINKING OF SILICON RUBBERS
CATALYSEUR POUR LA RÉTICULATION DE MASSES EN CAOUTCHOUC SILICONE

(30) Priorität: 04.03.2013 EP 13001090
(43) Veröffentlichungstag der Anmeldung: 13.01.2016
(73) Patentinhaber: Nitrochemie Aschau GmbH, 84544 Aschau am Inn (DE)
(72) Erfinder: PICHL, Ulrich, 84544 Aschau a. Inn (DE); SCHMIDT, Gerhard, 84453 Mühldorf a. Inn (DE); EDERER, Theodor, 84539 Zangberg (DE); KNOTT, Thomas, 84453 Mühldorf (DE); BART, Karl-Christian, 84539 Ampfing (DE); LIPPSTREU, Jörg, 81679 München (DE)
(74) Vertreter: Müller Schupfner & Partner Patent- und Rechtsanwaltspartnerschaft mbB (Muc)
(86) Internationale Anmeldenummer: PCT/EP2014/000539
(87) Internationale Veröffentlichungsnummer: WO 2014/135262

(56) Entgegenhaltungen:
- EP-A1- 1 535 940
- EP-A2- 0 327 847
- EP-A2- 2 280 041
- WO-A1-2011/051092
- WO-A1-2013/082155
- CN-A- 102 277 127

## Beschreibung

Die vorliegende Erfindung betrifft eine Zusammensetzung zur Herstellung einer Siliconkautschukmasse, wobei die Zusammensetzung diesen Katalysator umfasst. Darüber hinaus stellt die vorliegende Erfindung eine Verwendung des Katalysators zum Vernetzen einer Siliconkautschukmasse bereit, sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

### Hintergrund der Erfindung

Kalthärtende Siliconkautschukmassen, auch RTV-(Raumtemperatur-vernetzende)-Siliconkautschukmassen genannt, sind schon lange als maßgeschneiderte Werkstoffe mit elastischen Eigenschaften bekannt. Sie werden allgemein als Dichtungsmassen oder Klebstoffe für Glas, Porzellan, Keramik, Stein, Kunststoffe, Metalle, Holz usw. eingesetzt, z.B. als Fugen- oder Dichtungsmassen im Bauwesen und im Sanitärbereich, oder als Beschichtungsmaterialien, z.B. in der Elektronikindustrie, (Römpp Chemie Lexikon, CD ROM, Version 2.0, Hrsg. J. Falbe, Thieme-Verlag, Stuttgart 1999 sowie Ullmanns Enzyklopädie der Technischen Chemie, 4. Auflage, Hrsg. E. Bartholome, Verlag Chemie, Weinheim 1982, Band 21, S. 511 ff.). Insbesondere werden Einkomponenten-RTV-Siliconkautschukmassen (RTV-1) eingesetzt; dabei handelt es sich beispielsweise um plastisch formbare Mischungen aus α,ω-Dihydroxypolyorganosiloxanen und geeigneten Vernetzern (die im Fachgebiet auch als Vernetzungsmittel oder Härter bezeichnet werden), die unter Feuchtigkeitsausschluß (z. B. in einer geeigneten Kartusche) aufbewahrt werden können, aber unter dem Einfluß von Wasser oder Luftfeuchtigkeit bei Raumtemperatur polymerisieren. Die Polymerisation erfolgt in der Regel durch die Kondensation von SiOH-Gruppen mit geeigneten hydrolysierbaren SiX-Gruppen der Vernetzer.

In Abhängigkeit von den gewünschten chemischen und physikalischen Eigenschaften des Polymerisationsproduktes, wie z.B. dem gewünschten Vernetzungsgrad, der Lösemittelresistenz usw., werden in der Regel verschiedene polyfunktionelle, z.B. tri- und/oder tetrafunktionelle, Vernetzer (Härter) zusammen mit verschiedenen difunktionellen oder mehrere funktionelle Gruppen tragenden Polyorganosiloxanverbindungen eingesetzt. Dabei werden besonders häufig α,ω-Dihydroxypolyorganosiloxane als difunktionelle Polyorganosiloxanverbindungen eingesetzt.

RTV-1-Siliconkautschukmassen werden anhand der bei der Hydrolyse des Vernetzers freigesetzten Austrittsgruppen (HX) in saure (HX = Säuren, wie z.B. Essigsäure, etc.), basische (z.B. HX = Amine, etc.) und neutrale (z.B. HX = Alkohole, Oxime, etc.) Systeme eingeteilt. Zur Zeit erhältliche RTV-1-Siliconkautschukmassen enthalten in der Regel sauer vernetzende Systeme, die unter Abgabe von Essigsäure hydrolysieren, oder neutral vernetzende Systeme, die unter Abgabe von Oximverbindungen, wie beispielsweise Butan-2-onoxim (bzw. Methyl-Ethyl-Ketoxim, MEKO), hydrolysieren.

Für den gewünschten breiten Anwendungsbereich der Siliconkautschukmassen sollten diese auf möglichst vielen Oberflächen haften, wie beispielsweise auf Holz, lackiertem Holz, lasiertem Holz, Metallen, wie Stahl, Aluminium, pulverbeschichtetem Aluminium, Glas, Kunststoffen, wie Polyvinylchlorid (PVC), Polyamid, Beton, etc. Darüber hinaus sollten die Siliconkautschukmassen in einer üblichen Kartusche lagerbeständig sein, d.h. ihre Eigenschaften sollten sich nicht in Abhängigkeit von der Aufbewahrungszeit ändern, und das möglichst sowohl in einer nach der Befüllung abgeschlossenen Kartusche, als auch in einer bereits geöffneten und/oder teilweise entleerten Kartusche. Schließlich sollte das Polymerisationsprodukt nach abgeschlossener Vernetzung (Härtung) der Siliconkautschukmasse transparent bzw. klar sein.

Neben der geeigneten Auswahl der eigentlichen Polymerkomponenten, wie Vernetzer und Polyorganosiloxan, werden zur Kontrolle von Polymerisationsgeschwindigkeit und/oder Polymerisationsgrad in der Regel ein Katalysator beigefügt, durch den wichtige Produkteigenschaften der Siliconkautschukmassen beeinflusst werden, wie z.B. die Hautbildungszeit (d.h. die Zeit, in der sich auf einer ausgebrachten Masse eine erste vollständige Haut bildet), die Klebfreizeit (d. h. die Zeit, nach der die Masse keine Klebrigkeit mehr aufweist), die Durchhärtung (d. h. die Zeit, in der die Polymerisation abgeschlossen ist), usw. Beispielsweise werden als Eigenschaften für gewerbliche Silicondichtstoffe eine Hautbildungszeit von 5 bis 15 Minuten, eine Klebfreizeit von 15 bis 120 Minuten und eine Durchhärtung von maximal 7 Tagen bei einer Applikation mit einer Höhe von 10 mm gefordert. Weitere Informationen zu Hautbildungszeit, Klebfreizeit und Durchhärtung können beispielsweise dem "Praxishandbuch Dichtstoffe" (3. Auflage 1990) entnommen werden, das vom Industrieverband Dichtstoffe e.V. (IVD) herausgegeben wurde.

Als Katalysator für Siliconkautschukmassen wurde bisher ein metallorganischer Katalysator verwendet, wie er üblicherweise für kondensationsvernetzende Polysiloxane eingesetzt wird, insbesondere ein Katalysator auf Basis einer zinnorganischen Verbindung, wie beispielsweise ein Alkyl-zinn-carboxylat, insbesondere Dibutylzinndilaurat und Dioctyl-zinn-dilaurat. Derartige zinnorganische Verbindungen weisen jedoch toxikologische Eigenschaften auf, die zur Einschränkung ihrer Verwendung in kommerziell erhältlichen Produkten geführt hat (s. EU-Richtlinie 76/769/EWG vom 28.05.2009).

Ersatzweise wurde im Stand der Technik bisher ein anderer Katalysator, der keine zinnorganische Verbindung umfasst, für die Vernetzung von Polysiloxanen verwendet.

Beispielsweise kann eine Titan-basierte Verbindungen als Katalysator verwendet werden, wie z.B. in EP 1 230 298 A1 und EP 2 290 007 A1 beschrieben wird. Allerdings ist bekannt, dass ein Katalysator auf Basis einer Titanverbindung zu Gelbfärbungen und/oder Oberflächenklebrigkeit in den Produkten führen kann, sowie eine langsame Vulkanisationsgeschwindigkeit, eine mangelnde Lagerungsstabilität und eine Unverträglichkeit mit gängigen Haftvermittlern auf Aminosilanbasis aufweist.

Weiterhin beschreibt EP 1 230 298 A1 einen Katalysator auf Basis von Aminen und Metallsalzen von Zinn, Zink, Eisen, Blei, Barium und Zirkonium sowie auf Basis von Chelaten von Zinn. Dieser Katalysator führt zu Produkten mit einer geringen Gelbfärbung, ist jedoch laut EP 2 290 007 A1 ein langsamer Katalysator.

Deshalb schlägt EP 2 290 007 A1 einen Katalysator auf Basis von Metallverbindungen der I. und II. Haupt- und Nebengruppen, d.h. Li, Na, K, Rb, Cs, Be, Mg, Ca, Sr, Ba, Cu, Ag, Au, Zn, Cd und Hg, in Form von reinen Carboxylaten vor, die bei Zugabe eines sauren Co-Katalysators in Form einer organischen oder anorganischen Säure ein Produkt mit akzeptablen Härtungsverlauf ergeben. EP 2 290 007 A1 beschreibt die Verwendung dieses Katalysators in Siliconkautschukmassen mit Vernetzern (Härtern) die bei der Hydrolyse saure (Essigsäure) bzw. neutrale (Alkohole bzw. MEKO) Verbindungen abgeben, insbesondere unter Verwendung eines Katalysators aus einem Li- Carboxylat bzw. aus einem Sr-Carboxylat.

Die Verwendung eines Katalysators auf Basis von Li-, Na-, K-, Mg-, Ca-, Sr-Verbindungen ohne zusätzliche gleichzeitige Verwendung von einem sauren Co-Katalysator wird in EP 2 280 041 A1 beschrieben. Dort wird weiter beschrieben, dass insbesondere die Verwendung von Octasoligem Lithium oder Octosoligem Strontium in Kombination mit Alkoxy-, Acetoxy- oder Oximo-RTV-1 Produkte mit gewünschten Eigenschaften ergeben.

### Aufgabe der Erfindung

Die Erfinder der vorliegenden Erfindung haben allerdings gefunden, dass es nicht möglich ist, die oben beschriebenen bekannten Zinn-freien Katalysatoren in Verbindung mit bekannten Siliconkautschukmassen, die unter Verwendung von Katalysatoren auf Basis von Zinn-organischen Verbindungen optimiert worden sind, unter Erhalt der optimierten Produkteigenschaften der Siliconkautschukmassen zu verwenden. Ein bloßes Ersetzen eines Zinnbasierten Katalysators durch einen der bekannten Zinn-freien Katalysatoren ergibt kein Produkt (RTV-1) mit den gewünschten Eigenschaften. So wurde gefunden, dass die mit den bekannten Zinn-freien Katalysatoren hergestellten Dichtstoffmassen eine schlechte Haftung sowie eine ungenügende Lagerstabilität aufweisen. Insbesondere mit Acetat-Vernetzern wurde darüber hinaus eine mangelhafte Durchhärtung beobachtet.

Es ist deshalb eine Aufgabe der Erfindung, einen verbesserten Katalysator für Siliconkautschukmassen bereitzustellen, der nicht nur Zinn-frei ist, sondern auch alle für RTV-1 gewünschten Eigenschaften in Produktzusammensetzungen aufrechterhält, die unter Verwendung von Katalysatoren auf Basis von Zinn-organischen Verbindungen optimiert worden sind.

Die Aufgabe der Erfindung wird durch den Gegenstand der unabhängigen Ansprüche gelöst. Bevorzugte Ausführungsformen sind Gegenstand der abhängigen Ansprüche.

### Kurze Beschreibung der Erfindung

Zur Lösung der oben beschriebenen Aufgabe stellt die vorliegende Erfindung bereit: eine Zusammensetzung zur Herstellung einer Siliconkautschukmasse, wobei die Zusammensetzung diesen Katalysator umfasst; eine Verwendung des Katalysators zum Vernetzen einer Siliconkautschukmasse; sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

Durch ausführliche Studien haben die Erfinder der vorliegenden Erfindung überraschend gefunden, dass die Aufgabe der Erfindung gelöst werden kann, indem als Katalysator in einer Siliconkautschukmasse nicht eine einzelne Zinn-freie Einzelverbindung wie im Stand der Technik, sondern eine Mischung aus mindestens zwei Zinn-freien Verbindungen mit katalytischer Wirkung eingesetzt wird. Eine solche Mischung aus Einzelkatalysatoren wurde bisher nicht eingesetzt, bietet aber neben den toxikologischen Vorteilen, den zusätzlich Vorteil, dass sie leicht an bestehende Zusammensetzungen angepasst werden kann.

### Detaillierte Beschreibung der Erfindung

Die vorliegende Erfindung stellt eine Zusammensetzung bereit, die mindestens eine Organosiliconverbindung, mindestens einen Vernetzer, und einen Katalysator umfasst. Die erfindungsgemäße Zusammensetzung kann zur Herstellung einer Siliconkautschukmasse verwendet werden.

Die vorliegende Erfindung verwendet einen Katalysator für die Vernetzung von Siliconkautschukmassen. Der Katalysator, der in der erfindungsgemäßen Zusammensetzung enthalten ist bzw. in der erfindungsgemäßen Verwendung verwendet wird, umfasst ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird und das Verhältnis der Anzahl der Zinkatome des Zinksalzes einer Carbonsäure zu der Anzahl der Metallatome des Metallsalzes einer Carbonsäure beträgt von 2:1 bis 1:2.

Der Katalysator, der in der erfindungsgemäßen Zusammensetzung enthalten ist bzw. in der erfindungsgemäßen Verwendung verwendet wird, ist somit eine Mischung aus mindestens zwei voneinander verschiedenen Verbindungen, vorzugsweise aus zwei bis zwanzig voneinander verschiedenen Verbindungen, weiter bevorzugt aus zwei bis acht voneinander verschiedenen Verbindungen, und besonders bevorzugt aus zwei oder drei voneinander verschiedenen Verbindungen.

Der Katalysator umfasst genau zwei voneinander verschiedene Metallsalze von Carbonsäuren. Dabei handelt es sich um zwei Metallsalze unterschiedlicher Metalle. Die beiden Metallsalze der Carbonsäuren in dem Katalysator sind in einem Verhältnis der Anzahlen der jeweiligen Metallatome (Zahlenverhältnis) von 2:1 bis 1:2, bevorzugt von 1,3:1 bis 1:1,3, weiter bevorzugt von 5:4 bis 4:5, weiter bevorzugt von 1,2:1 bis 1:1,2, noch weiter bevorzugt von 1,1:1 bis 1:1,1, und besonders bevorzugt von etwa 1:1 umfasst.

Jede einzelne der in dem Katalysator umfassten Verbindungen ist ein Metallsalz einer oder mehrerer Carbonsäuren.

Der Begriff "Carbonsäure" bezeichnet dabei eine organische Verbindung, vorzugsweise einen Kohlenwasserstoff, mit mindestens einer Carboxylgruppe -COOH. Bevorzugt umfasst eine Carbonsäure einen Kohlenwasserstoff, der von 1 bis 25 Kohlenstoffatome umfasst, vorzugsweise von 5 bis 20 Kohlenstoffatome, und besonders bevorzugt von 6 bis 19 Kohlenstoffatome. Der Kohlenwasserstoff der Carbonsäure kann gesättigt, ungesättigt oder aromatisch sein, oder entsprechende Bindungen umfassen. Der Kohlenwasserstoff der Carbonsäure kann eine geradkettige oder verzweigte Kohlenwasserstoffkette umfassen, und/oder Ringe aus Kohlenwasserstoffen und/oder geeigneten Heteroatomen. Bevorzugt umfasst die Carbonsäure einen gesättigten Kohlenwasserstoff (Alkan), der eine geradkettige oder verzweigte Kohlenwasserstoffkette umfasst. Die Carbonsäure kann eine oder mehrere Carboxylgruppen umfassen, vorzugsweise eine, zwei oder drei Carboxylgruppen. Besonders bevorzugt sind Monocarbonsäuren und Dicarbonsäure. In besonders bevorzugten Dicarbonsäuren sind die zwei Carboxylgruppen an benachbarte Kohlenstoffatome gebunden. Ganz besonders bevorzugt sind Monocarbonsäuren.

Eine besonders bevorzugte Carbonsäure ist 2-Ethylhexansäure.

Ein "Metallsalz einer Carbonsäure" im Sinne dieser Erfindung ist eine Verbindung, die mindestens ein Carboxylatanion und mindestens ein Metallkation umfasst. Als Carboxilatanion wird dabei das Anion bezeichnet, das durch Deprotonierung einer Carboxylgruppe einer Carbonsäure gebildet wird. Somit ist ein Carboxylatanion im Sinne dieser Erfindung eine organische Verbindung, vorzugsweise ein Kohlenwasserstoff, mit mindestens einer Carboxylatgruppe -COO⁻, die aus jeder der oben beschriebenen Carbonsäuren gebildet werden kann. Das Metallkation ist ein Kation des jeweiligen Metalls, vorzugsweise in einer unter den Bedingungen der Anwendung stabilen Oxidationsstufe. Entsprechend weist das Metallkation vorzugsweise eine positive Ladung von +1 bis +4 auf, weiter bevorzugt von +1 oder +2 oder +3. Beispiele für ein einwertiges Metallkation sind K⁺, Li⁺ und Na⁺. Beispiele für ein zweiwertiges Metallkation (Ladung +2) sind Ca²⁺, Mg²⁺ und Zn²⁺, und ein Beispiel für ein dreiwertiges Metallkation (Ladung +3) ist Bi³⁺. Für eine ladungsneutrale Verbindung kann die Ladung des Metallkations durch die Anzahl der einwertig negativ geladenen Carboxylatgruppen ausgeglichen werden, so dass das Verhältnis von Metallkation zu Carboxylatgruppe in dem Metallsalz je nach Ladung des Metallkations 1:1, 1:2, 1:3 usw., bis zur maximalen Ladung, betragen kann. Beispielsweise entspricht im Fall von Monocarbonsäuren das Verhältnis von Metall zu Carbonsäure bei einwertigen Metallkationen 1:1, bei zweiwertigen Metallkationen 1:2, bei dreiwertigen Metallkationen 1:3, usw. Bei Dicarbonsäuren mit zwei Carboxylatgruppen wird das Verhältnis entsprechend angepasst, so dass beispielsweise bei zweiwertigen Metallkationen das Verhältnis von Metall zu Dicarboxylat 1:1 betragen kann, usw. Das Metallsalz kann Carboxylatanionen einer einzigen Carbonsäure enthalten, oder Carboxylatanionen mehrerer voneinander verschiedener Carbonsäuren. Beispielsweise kann das Matallsalz eines zweiwertigen Metallkations ein Carboxylatanion einer ersten Carbonsäure (R¹-COO⁻) und ein Carboxylatanion einer davon verschiedenen zweiten Carbonsäure (R²-COO⁻) enthalten.

Neben Metallkation und Carboxylatanion(en) kann das Metallsalz einer Carbonsäure auch weitere Bestandteile umfassen, wie beispielsweise andere Anionen, die keine Carboxylatanionen sind, z.B. Halogenidanionen, Nitratanionen, Sulfatanionen oder dergleichen, oder neutrale Moleküle, z.B. Solvatmoleküle, oder dergleichen.

Die Metallsalze der Carbonsäuren sind in dem Katalysator in einem Verhältnis der Anzahlen der jeweiligen Metallatome (Zahlenverhältnis) von 2:1 bis 1:2, bevorzugt von 1,3:1 bis 1:1,3, weiter bevorzugt von 5:4 bis 4:5, weiter bevorzugt von 1,2:1 bis 1:1,2, noch weiter bevorzugt von 1,1:1 bis 1:1,1, und besonders bevorzugt von etwa 1:1 umfasst.

Es wurde überraschend gefunden, dass ein Katalysator für die Vernetzung von Siliconkautschukmassen, der mindestens zwei voneinander verschiedene Metallsalze von Carbonsäuren gemäß der zuvor gegebenen Definition umfasst, bei der Herstellung von Siliconkautschukmassen, insbesondere von RTV-1 Siliconkautschukmassen, besonders vorteilhafte Produkteigenschaften bedingt. Der Katalysator kann vorteilhaft verwendet werden, ohne dass ein Co-Katalysator benötigt wird.

Es wurde gefunden, dass so Produkte mit besonders vorteilhaften Eigenschaften bereitgestellt werden können. Weiter bevorzugt sind Anionen von gesättigten Carbonsäuren mit sechs bis zehn Kohlenstoffatomen. Besonders bevorzugt sind Anionen einer Carbonsäure mit einer verzweigten Kohlenwasserstoffkette aus acht Kohlenstoffatomen. Eine besonders bevorzugte Ausführungsform einer Carbonsäure ist 2-Ethyl-Hexansäure.

Der Katalysator, der in der erfindungsgemäßen Zusammensetzung enthalten ist bzw. in der erfindungsgemäßen Verwendung verwendet wird, umfasst ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird und das Verhältnis der Anzahl der Zinkatome des Zinksalzes einer Carbonsäure zu der Anzahl der Metallatome des Metallsalzes einer Carbonsäure beträgt von 2:1 bis 1:2.

Die Metallsalze der Carbonsäuren in dem Katalysator sind in einem Verhältnis der Anzahl der Zinkatome des Zinksalzes einer Carbonsäure zu der Anzahl der Metallatome des Metallsalzes einer Carbonsäure (Zahlenverhältnis) von 2:1 bis 1:2, bevorzugt von 1,3:1 bis 1:1,3, weiter bevorzugt von 5:4 bis 4:5, weiter bevorzugt von 1,2:1 bis 1:1,2, noch weiter bevorzugt von 1,1:1 bis 1:1,1, und besonders bevorzugt von etwa 1:1 umfasst.

Es wurde gefunden, dass so Produkte mit besonders vorteilhaften Eigenschaften bereitgestellt werden können.

Weiter bevorzugt umfasst der Katalysator, der in der erfindungsgemäßen Zusammensetzung enthalten ist bzw. in der erfindungsgemäßen Verwendung verwendet wird, ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz und einem Calciumsalz jeweils einer oder mehrerer verzweigten gesättigten Carbonsäuren mit sechs bis neunzehn Kohlenstoffatomen ausgewählt wird.

Besonders bevorzugt umfasst der Katalysator ein Zinksalz einer verzweigten Carbonsäure mit sechs bis zehn Kohlenstoffatomen in Kombination mit einem Bismutsalz einer verzweigten Carbonsäure mit sechs bis zehn Kohlenstoffatomen und/oder einem Calciumsalz einer verzweigten Carbonsäure mit sechs bis zehn Kohlenstoffatomen. In einer besonders bevorzugten Ausführungsform umfasst der Katalysator ein Zinksalz einer verzweigten Carbonsäure mit acht Kohlenstoffatomen in Kombination mit einem Bismutsalz einer verzweigten Carbonsäure mit acht Kohlenstoffatomen und/oder einem Calciumsalz einer verzweigten Carbonsäure mit acht Kohlenstoffatomen.

Besonders bevorzugt umfasst der Katalysator, der in der erfindungsgemäßen Zusammensetzung enthalten ist bzw. in der erfindungsgemäßen Verwendung verwendet wird, Zink-bis(2-ethylhexanoat). Es wurde gefunden, dass mit Zink-bis(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, Bismut-tris(2-ethylhexanoat). Es wurde gefunden, dass mit Bismut-tris(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, Calcium-bis(2-ethylhexanoat). Es wurde gefunden, dass mit Calcium-bis(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, Natrium(2-ethylhexanoat). Es wurde gefunden, dass mit Natrium(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, eine Mischung aus Calcium-bis(2-ethylhexanoat) und Zink-bis(2-ethylhexanoat). Besonders bevorzugt wird ein Katalysator, der Calcium-bis(2-ethylhexanoat) und Zink-bis(2-ethylhexanoat) umfasst, zusammen mit einem Oximvernetzer verwendet.

Besonders bevorzugt umfasst der Katalysator eine Mischung aus Calcium-bis(2-ethylhexanoat) und Zink-bis(2-ethylhexanoat) in einem Verhältnis von (Gewichtsverhältnis) von 1:1 bis 1:2, und besonders bevorzugt 4:5.

Dies entspricht einem Zahlenverhältnis von Calcium-bis(2-ethylhexanoat) zu Zink-bis(2-ethylhexanoat) von etwa etwa 1,1:1 bis 1:1,9, und besonders bevorzugt von etwa 1:1,2.

Es wurde gefunden, dass mit einem Katalysator, der Calcium-bis(2-ethylhexanoat) und Zink-bis(2-ethylhexanoat), vorzugsweise im Verhältnis von 1:1 bis 1:3 (Gewichtsverhältnis), umfasst, Produkte mit besonders vorteilhaften Eigenschaften bereitgestellt werden können.

Es wurde gefunden, dass mit einem Katalysator, der Calcium-bis(2-ethylhexanoat) und Zink-bis(2-ethylhexanoat), vorzugsweise im Verhältnis von gerundet 1:1, insbesondere von etwa 1,3:1 bis 1:1,3 (Zahlenverhältnisse), umfasst, Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, eine Mischung aus Natrium(2-ethylhexanoat) und Zink-bis(2-ethylhexanoat). Besonders bevorzugt wird ein Katalysator, der Natrium(2-ethylhexanoat) und Zink-bis(2-ethylhexanoat) umfasst, zusammen mit einem Oximvernetzer verwendet.

Besonders bevorzugt umfasst der Katalysator eine Mischung aus Natrium(2-ethylhexanoat) und Zink-bis(2-ethylhexanoat) in einem Verhältnis von (Gewichtsverhältnis) 1:2.

Dies entspricht einem Zahlenverhältnis von Natrium(2-ethylhexanoat) zu Zink-bis(2-ethylhexanoat) von etwa 1:1,1.

Es wurde gefunden, dass mit einem Katalysator, der Natrium(2-ethylhexanoat) und Zink-bis(2-ethylhexanoat), vorzugsweise im Verhältnis von gerundet 1:1, insbesondere von etwa 1,3:1 bis 1:1,3 (Zahlenverhältnisse), umfasst, Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, eine Mischung aus Bismut-tris(2-ethylhexanoat) und Zink-bis(2-ethylhexanoat). Besonders bevorzugt wird ein Katalysator, der Bismut-tris(2-ethylhexanoat) und Zink-bis(2-ethyl-hexanoat) umfasst, zusammen mit einem Acetatvernetzer und/oder Alkoxyvernetzerverwendet.

Besonders bevorzugt umfasst der Katalysator eine Mischung aus Bismut-tris(2-ethylhexanoat) und Zink-bis(2-ethylhexanoat) in einem Verhältnis von (Gewichtsverhältnis) 2:1 bis 3:1, und besonders bevorzugt von 7:3.

Dies entspricht einem Zahlenverhältnis von Bismut-tris(2-ethylhexanoat) zu Zink-bis(2-ethylhexanoat) von etwa 1,1:1 bis 1:1,7, und besonder bevorzugt von etwa 1,3:1.

Es wurde gefunden, dass mit einem Katalysator, der Bismut-tris(2-ethylhexanoat) und Zink-bis(2-ethylhexanoat), vorzugsweise im Verhältnis von gerundet 1:1, insbesondere von etwa 1,3:1 bis 1:1,3 (Zahlenverhältnisse), umfasst, Produkte mit besonders vorteilhaften Eigenschaften bereitgestellt werden können.

Eine erfindungsgemäße Zusammensetzung umfasst mindestens eine Organosiliconverbindung, vorzugsweise zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyi-terminierte Polydialkylsiloxane, α,ω-dihydroxyl-terminierte Polydialkenylsiloxane oder α,ω-dihydroxyl-terminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder α,ω-dihydroxyl-terminierte Polydiorganosiloxane mit durch Hydroxyl- und/oder Aminogruppen-substituierten organischen Substituenten an den Siliciumatomen.

Besonders bevorzugte Beispiele für eine Organosiliconverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt.

Es können auch Mischungen aus Polydiorganosiloxanen mit unterschiedlichen Viskositäten verwendet werden.

Eine erfindungsgemäße Zusammensetzung umfasst mindestens einen Vernetzer. Dabei kann jeder bekannte Vernetzer verwendet werden. Bevorzugt sind Vernetzer auf Basis von Silanverbindungen mit hydrolysierbaren Acetatresten und/oder Vernetzer auf Basis von Silanverbindungen mit hydrolysierbaren Oximresten. Neben den hydrolisierbaren Acetat- und/oder Oximgruppen können die Vernetzer nicht-hydrolisierbare Reste umfassen, wie beispielsweise Alkylgruppen, Alkenylgruppen, Alkinylgruppen, Arylgruppen, und dergleichen.

Bevorzugte nicht-hydrolisierbare Reste sind Methyl, Ethyl, Propyl, Isopropyl, Isobutyl, Vinyl, Phenyl und dergleichen. Die als Vernetzer verwendete Silanverbindung hat vorzugsweise die allgemeine Formel SiXₙY₍₄₋ₙ₎, wobei mit X die hydrolisierbaren Reste und mit Y die nichthydrolisierbaren Reste bezeichnet sind, und n eine ganze Zahl von 1 bis 4 ist. Bevorzugt umfasst ein Vernetzer drei (n = 3) oder vier (n = 4) hydrolisierbare Gruppen.

Bevorzugt wird der Vernetzer ausgewählt aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isoprpyl-Ketoxim-Gruppen.

Beispiele bevorzugter Acetatvernetzer umfassen Methyl-triacetoxysilan, Ethyl-triacetoxysilan, Propyl-triacetoxysilan, Vinyl-triacetoxysilan, Phenyl-triacetoxysilan, Tetraacetoxysilan, und dergleichen.

Die Acetatvernetzer können als Einzelverbindung eingesetzt werden, oder als Mischung aus zwei oder mehreren Acetatvernetzern.

Neben Mischungen, die nur aus Acetatvernetzern bestehen, können auch Vernetzermischungen verwendet werden, die zusätzlich Vernetzer auf Basis von Silanverbindungen mit hydrolisierbaren Alkoxygruppen umfassen. Vernetzer auf Basis von Silanverbindungen mit hydrolisierbaren Alkoxygruppen sind vergleichbar zu den Acetatvernetzern aufgebaut, wobei jede Acetoxygruppe durch eine Alkoxygruppe ersetzt ist. Alkoxyvernetzer geben bei Hydrolyse bzw. Polymerisation (Polykondensation) neutrale Alkoholmoleküle ab. Beispiele bevorzugter Alkoxygruppen sind Methoxy, Ethoxy, Propoxy, und dergleichen. Beispiele bevorzugter Alkoxyvernetzer umfassen Methyltrimethoxysilan, Ethyltrimethoxysilan, Propyltrimethoxysilan, Vinyltrimethoxysilan, Phenyltrimethoxysilan, Methyltriethoxysilan, Ethyltriethoxysilan, Propyltriethoxysilan, Vinyltriethoxysilan, Phenyltriethoxysilan, und dergleichen.

Beispiele bevorzugter Oximvernetzer umfassen Methyl-tris(acetonoximo)silan, Ethyl-tris(acetonoximo)silan, Propyl-tris(acetonoximo)silan, Vinyl-tris(acetonoximo)silan, Phenyl-tris(acetonoximo)silan, Tetra(acetonoximo)silan, Methyl-tris(methyl-ethyl-ketoximo)silan, Ethyl-tris(methyl-ethyl-ketoximo)silan, Propyl-tris(methyl-ethyl-ketoximo)silan, Vinyl-tris(methyl-ethyl-ketoximo)silan, Phenyl-tris(methyl-ethyl-ketoximo)silan, Tetra(methyl-ethyl-ketoximo)silan, Methyl-tris(methyl-propyl-ketoximo)silan, Ethyl-tris(methyl-propyl-ketoximo)silan, Propyl-tris(methyl-propyl-ketoximo)silan, Vinyl-tris(methyl-propyl-ketoximo)silan, Phenyl-tris(methyl-propyl-ketoximo)silan, Tetra(methyl-propyl-ketoximo)silan, Methyl-tris(methyl-isopropyl-ketoximo)silan, Ethyl-tris(methyl-isopropyl-ketoximo)silan, Propyl-tris(methyl-isopropyl-ketoximo)silan, Vinyl-tris(methyl-isopropyl-ketoximo)silan, Phenyl-tris(methyl-isopropyl-ketoximo)silan, Tetra(methyl-iso-propyl-ketoximo)silan, Methyl-tris(methyl-isobutyl-ketoximo)silan, Ethyl-tris(methyl-isobutyl-ketoximo)silan, Propyl-tris(methyl-isobutyl-ketoximo)silan, Vinyl-tris(methyl-isobutyl-ketoximo)silan, Phenyl-tris(methyl-isobutyl-ketoximo)silan, Tetra(methyl-isobutyl-ketoximo)silan, und dergleichen.

Die Oximvernetzer können als Einzelverbindung eingesetzt werden, oder als Mischung aus zweioder mehreren Oximvernetzern.

Es wurde gefunden, daß die Zusammensetzung unter Feuchtigkeitsausschluß über Zeitspannen von mehr als 12 Monaten aufbewahrt werden kann und unter dem Einfluß von Wasser oder Luftfeuchtigkeit bei Raumtemperatur polymerisiert.

Besonders bevorzugt umfasst eine erfindungsgemäße Zusammensetzung, die Acetatvernetzer umfasst, einen Katalysator, der Bismut-tris(2-ethylhexanoat) und Zink-bis(2-ethylhexanoat) umfasst. Besonders bevorzugt umfasst eine erfindungsgemäße Zusammensetzung, die Oximvernetzer umfasst, einen Katalysator, der Calcium-bis(2-ethylhexanoat) und Zink-bis(2-ethylhexanoat) umfasst, oder einen Katalysator, der Natrium(2-ethylhexanoat) und Zink-bis(2-ethylhexanoat) umfasst.

In Gegenwart von Wasser oder Luftfeuchtigkeit polymerisieren bzw. kondensieren die Bestandteile Vernetzer (Härter) und Organosiliconverbindung der erfindungsgemäßen Zusammensetzung unter Ausbildung von Si-O-Si-Bindungen zu Siliconkautschukmassen, Die Polymerisationsprodukte, die unter Verwendung der erfindungsgemäßen Zusammensetzung hergestellt werden, sind stippenfrei, transparent und klar. Somit kann die erfindungsgemäße Zusammensetzung als Dichtungsmittel, Klebstoff, Beschichtungsmittel oder dergleichen verwendet werden.

Besonders bevorzugt umfasst die erfindungsgemäße Zusammensetzung 40 bis 90 Gew.-% der Organosiliconverbindung, 1 bis 15 Gew.-% des Vernetzers, und 0,1 bis 5,0 Gew.-% des Katalysators, weiter bevorzugt 0,5 bis 2,0 Gew.-% des Katalysators, wobei der Rest jeweils durch übliche Zusätze ausgemacht wird.

Falls gewünscht, kann die erfindungsgemäße Zusammensetzung weitere übliche Zusätze umfassen. Übliche Zusätze sind Füllstoffe, Farbmittel, Weichmacher, Thixotrophiermittel, Benetzungsmittel, Haftmittel, und andere.

Als Füllstoffe können sowohl verstärkende als auch nicht-verstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotrophiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt, insbesondere von 100 cSt, Paraffinöle und polysubstituierte Alkylbenzole.

Als Benetzungs- und/oder Haftmittel (Haftvermittler) werden bevorzugt an sich bekannte Silanverbindungen mit reaktive Gruppen tragenden organischen Substituenten am Siliciumatom verwendet, die sich von den erfindungsgemäß verwendeten Organosiliconverbindungen unterscheiden, wie z.B. Organosilane mit reaktiven Amin-, Carbonsäure-, Epoxy- oder Thiolgruppen. Besonders bevorzugte Beispiele umfassen Aminosilane, wie Aminoethyl-aminopropyl-trialkoxysilane. Konkrete Beispiele besonders bevorzugter Haftmittel (Haftvermittler) sind 3-Aminopropyl-triethoxysilan, 3-Aminopropyltrimethoxysilan, Aminoethylaminopropyl-trimethoxysilan, Butylaminopropyl-triethoxysilan, Butylaminopropyl-trimethoxysilan, Propylaminopropyl-triethoxysilan, Propylaminopropyltrimethoxysilan, N-Cyclohexyl-3-aminopropyl-trimethoxysilan, N-Cyclohexyl-3-aminopropyl-triethoxysilan, und Co-Oligomere von Diamino/alkyl funktionellen Silanen, welches beispielsweise als Dynasylan 1146 von Degussa erhältlich ist. Auch andere oligomere Haftvermittler können verwendet werden.

In einem weiteren Aspekt stellt die vorliegende Erfindung eine Verwendung der erfindungsgemäßen Zusammensetzung als Dichtungsmittel, Klebstoff, Beschichtungsmittel oder dergleichen bereit. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

Die erfindungsgemäße Zusammensetzung kann als RTV-Siliconkautschukmasse entsprechend der gewünschten Anwendung auf einen beliebigen Untergrund aufgetragen werden, wo sie dann unter Einfluß von Wasser oder Luftfeuchtigkeit bei Raumtemperatur polymerisiert. Beispielsweise wird die erfindungsgemäße Zusammensetzung bei Verwendung derselben als Dichtungsmittel in eine abzudichtende Fuge oder dergleichen eingebracht. Bei Verwendung der erfindungsgemäßen Zusammensetzung als Klebstoff wird sie auf eines oder beide der zu verbindenden Teile aufgebracht und diese dann zusammengefügt. Die erfindungsgemäße Zusammensetzung zeichnet sich durch ausgezeichnete Haftung auf allen wichtigen Materialien aus, wie beispielsweise auf Holz, lackiertem Holz, lasiertem Holz, Aluminium, pulverbeschichtetem Aluminium, Glas, PVC, Polyamid, Stahl, Beton, und vielen anderen Materialien. Das erhaltene Polymer ist transparent und weist eine vorteilhafte Elastizität und Härte auf. Außerdem zeichnet sich die erfindungsgemäße Zusammensetzung durch eine kurze Hautbildungszeit, Klebfreizeit und Frühbeanspruchung aus. Darüber hinaus weist die erfindungsgemäße Zusammensetzung vorteilhafte Lagereigenschaften in der Katusche auf.

In einem weiteren Aspekt stellt die vorliegende Erfindung eine Verwendung eines Katalysators zum Vernetzen einer Siliconkautschukmasse bereit, wobei der Katalysator mindestens zwei voneinander verschiedene Verbindungen umfasst, die unabhängig voneinander aus Metallsalzen von Carbonsäuren ausgewählt werden.

Der in der erfindungsgemäßen Verwendung verwendete Katalysator ist oben detailliert beschrieben worden.

Bevorzugt wird ein Katalysator verwendet, der mindestens ein Metallsalz einer Carbonsäure umfasst, das aus Bismut-tris(2-ethylhexanoat), Calcium-bis(2-ethylhexanoat), Natrium(2-ethylhexanoat) und Zink-bis(2-ethylhexanoat) ausgewählt wird.

Besonders bevorzugt umfasst der verwendete Katalysator Calcium-bis(2-ethylhexanoat) und Zink-bis(2-ethyl-hexanoat), vorzugsweise in einem Zahlenverhältnis von 1,3:1 bis 1:1,3.

Besonders bevorzugt wird ein Katalysator, der Calcium-bis(2-ethylhexanoat) und Zink-bis(2-ethylhexanoat) umfasst, zusammen mit einem Oximvernetzer verwendet.

Besonders bevorzugt umfasst der verwendete Katalysator B-tris(2-ethylhexanoat) und Zink-bis(2-ethylhexanoat), vorzugsweise in einem Zahlenverhältnis von 1,3:1 bis 1:1,3.

Besonders bevorzugt wird ein Katalysator, der Bismut-tris(2-ethylhexanoat) und Zink-bis(2-ethylhexanoat) umfasst, zusammen mit einem Acetatnetzer verwendet.

Besonders bevorzugt umfasst der verwendete Katalysator Natrium(2-ethylhexanoat) und Zink-bis(2-ethylhexanoat), vorzugsweise in einem Zahlenverhältnis von 1,3:1 bis 1:1,3.

Besonders bevorzugt wird ein Katalysator, der Natrium(2-ethylhexanoat) und Zink-bis(2-ethylhexanoat) umfasst, zusammen mit einem Oximvernetzer verwendet.

Besonders bevorzugt wird der Katalysator zum Vernetzen einer Siliconkautschukmasse verwendet, die mindestens eine Organosiliconverbindung und mindestens einen Vernetzer umfasst, wobei als die mindestens eine Organosiliconverbindung und als der mindestens eine Vernetzer vorzugsweise die oben beschriebenen Verbindungen verwendet werden.

Besonders bevorzugt umfasst die verwendete Organosiliconverbindung mindestens eine α,ω-dihydroxyl-terminierte Polyorganosiloxanverbindung, insbesondere ein α,ω-dihydroxyl-terminiertes Polydialkylsiloxan.

Besonders bevorzugt umfasst der verwendete Vernetzer mindestens eine Verbindung, die aus der Gruppe ausgewählt wird, die aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isopropyl-Ketoxim-Gruppen, besteht.

Besonders bevorzugt werden 0,1 bis 5,0 Gew.-% des Katalysators mit 40 bis 90 Gew.-% der Organosiliconverbindung und 1 bis 15 Gew.-% des Vernetzers verwendet.

Durch die erfindungsgemäße Verwendung des beschriebenen Katalysators kann eine Vernetzung einer Siliconkautschukmasse entsprechend einer gewünschten Anwendung vorteilhaft gesteuert werden, so dass Polymerisationsprodukte mit gewünschten Eigenschaften gebildet werden.

### Beispiele

In den Beispielen und Vergleichsbeispielen werden folgende Metallsalze von Carbonsäuren verwendet, die von verschiedenen Herstellern erhältlich sind, wie beispielsweise der Fa. Gelest (Morrisville, USA).Das Natriumsalz und das Kaliumsalz von 2-Ethylhexansäure wurden von der Fa. Alfa Aesar GmbH & Co. KG, Karlsruhe, Deutschland bezogen.

Als Bismutsalz von Carbonsäuren wird Bismut-tris(2-ethylhexanoat) verwendet, das unter der CAS-Nr. 67874-71-9 klassifiziert ist.

Als Calciumsalz von Carbonsäuren wird Calcium-bis(2-ethylhexanoat) verwendet, das unter der CAS-Nr. 68409-80-3 klassifiziert ist.

Als Kaliumsalz von Carbonsäuren wird Kalium-2-ethylhexanoat verwendet, das unter der CAS-Nr. 3164-85-0 klassifiziert ist.

Als Lithiumsalz von Carbonsäuren wird Lithium-2-ethylhexanoat verwendet, das unter der CAS-Nr. 15590-62-2 klassifiziert ist.

Als Natriumsalz von Carbonsäuren wird Natrium-2-ethylhexanoat verwendet, das unter der CAS-Nr. 19766-89-3 klassifiziert ist.

Als Strontiumsalz von Carbonsäuren wird Strontium-bis(2-ethylhexanoat) verwendet, das unter der CAS-Nr. 2457-02-5 klassifiziert ist.

Als Zinksalz von Carbonsäuren wird Zink-bis(2-ethylhexanoat) verwendet, das unter der CAS-Nr. 85203-81-2 klassifiziert ist.

Die weiteren Chemikalien, die in den Beispielen und Vergleichsbeispielen verwendet werden, sind beispielsweise von den im folgenden genannten Herstellern erhältlich:
Polydimethylsiloxan (80000 cSt) von der Fa. Wacker Chemie, Burghausen, Deutschland;
Polymethylsiloxan (100 cSt) von der Fa. Dow Corning, Seneffe, Belgien;
Füllstoff (hochdisperse Kieselsäure) von der Fa. Cabot Rheinfelden, Deutschland;
Aminopropyltriethoxysilan von der Fa. Nitrochemie Aschau GmbH, Deutschland;
Haftvermittler (Co-Oligomeres auf Basis von Aminoethylaminopropyltrimethoxysilan) von der Fa. Nitrochemie Aschau GmbH, Deutschland;
Haftvermittler (Diacetoxy-di-tert.-butoxysilan) von der Fa. Nitrochemie Aschau GmbH, Deutschland;
Vernetzermischungen von der Fa. Nitrochemie Aschau GmbH, Deutschland.

### Messung der Produkteigenschaften der hergestellten Dichtstoffe

Die Produkteigenschaften Hautbildungszeit, Klebfreizeit, Frühbeanspruchung, vollständige Aushärtung, Aussehen und Shore-Härte A wurden für alle hergestellten Dichtstoffe nach üblichen Verfahren bestimmt (s. z.B. "Praxishandbuch Dichtstoffe" vom Industrieverband Dichtstoffe e.V., 3. Auflage 1990). Alle Messungen wurden bei Bedingungen von 23°C und 50% - Luftfeuchtigkeit durchgeführt.

Zur Bestimmung der Hautbildungszeit wurde die Zeit gemessen, zu der an der Oberfläche eines Probenstranges eine vollständige Schicht aus verfestigtem Material (Haut) beobachtet wurde.

Zur Bestimmung der Klebfreizeit wurde die Zeit gemessen, zu der die Oberfläche eines Probenstranges keine Klebrigkeit mehr aufweist.

Zur Bestimmung der Frühbeanspruchung wurde ein Siliconstreifen von 10 mm Höhe auf einen Blechstreifen ausgebracht. Die Belastbarkeit wird durch ein Abknicken des Streifens um 90° getestet. Angegeben wird die Zeit, bei der die Haut des Siliconstreifens nicht reißt.

Zur Bestimmung der vollständigen Aushärtung wird der Dichtstoff mit 4 mm Höhe auf eine Glasplatte aufgetragen und die Zeitdauer der Durchhärtung bis zur Glasplatte gemessen.

Zur Bestimmung der Oberflächenvernetzung (Kerbfestigkeit) wird ein Dichtstoffstreifen von 10 mm Höhe auf eine Glasplatte aufgetragen. Nach 24 Stunden bei Normbedingungen (21 bis 25°C; 40 bis 60% Luftfeutigkeit) wird eine Kerbe in die Oberfläche eingedrückt. Nach 10 Sekunden wird geprüft, ob die Einkerbung reversibel ist.

Das Aussehen wurde durch organoleptische Prüfung bestimmt.

Die Shore-Härte A wurde mit einem Zwick-Roell-Messgerät (Bez.: ASTM D 2240; DIN 53505; ISO 868) bestimmt. Dazu wurde die jeweilige Dichtstoffprobe mit einer Applikationshöhe von 10 mm aufgetragen und 7 Tage bei Normbedingungen (23°C/50%LF) aufbewahrt. Die Messung erfolgte dann nach 7 Tagen Lagerung bei Normbedingungen.

### Beispiel 1:

### Katalysator A

Es wird ein erfindungsgemäßer Katalysator hergestellt, der Calcium- und Zinksalze von Carbonsäuren umfasst.

Für Katalysator A werden Calcium-bis(2-ethylhexanoat) und Zink-bis(2-ethylhexanoat) im Verhältnis 4:5 gemischt (Gewichtsverhältnis).

### Beispiel 2:

### Katalysator B

Es wird ein erfindungsgemäßer Katalysator hergestellt, der Bismut- und Zinksalze von Carbonsäuren umfasst.

Für Katalysator B werden Bismut-tris(2-ethylhexanoat) und Zink-bis(2-ethylhexanoat) im Verhältnis 7:3 gemischt (Gewichtsverhältnis).

### Referenzbeispiel 1:

Es wird eine übliche Zinn-haltige Siliconkautschukmischung mit Oximvernetzer gemäß folgender Formulierung hergestellt:

| | |
|---|---|
| 556,0 g | α,ω-dihydroxyl-terminiertes Polydimethylsiloxan mit einer Viskosität von 80.000 cSt |
| 266,0 g | Polydimethylsiloxan mit Viskosität 100 cSt |
| 109,0 g | Hochdisperse Kieselsäure (Füllstoff) |
| 50,5 g | Vernetzermischung aus |
| | 14,5 g Vinyl-tris(ethylmethylketoximo)silan und |
| | 36,0 g Methyl-tris(ethylmethylketoximo)silan |
| 18,0 g | 3-Aminopropyltriethoxysilan (Thixotropiermittel) |
| 4,0 g | Dibutylzinnlaureat als Katalysator |

Der Dichtstoff hat nach Ausbringung an Luft:
- eine Hautbildungszeit von 10 min
- eine Klebfreizeit von 30 min
- eine Frühbeanspruchung nach 80 min
- eine vollständige Aushärtung nach 24 h (Kerbfestigkeit)
- ein transparentes Aussehen
- eine Shore-Härte A von 24

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Referenzbeispiel 1 illustriert die Produkteigenschaften einer derzeitig üblichen Zinn-haltigen Dichtstoffmischung.

### Vergleichsbeispiel 1:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 3,0 g | Zink-bis(2-ethylhexanoat) |
| 1,0 g | 2-Ethylhexansäure (Co-Katalysator) |

Der Dichtstoff hat nach Ausbringung an Luft:
- eine Hautbildungszeit von 7 min
- eine Klebfreizeit von 20 min
- eine Frühbeanspruchung nach 160 min
- eine vollständige Aushärtung nach 24 h (Kerbfestigkeit)
- ein transparentes Aussehen
- eine Shore-Härte A von 22

Weiterhin wurde gefunden, dass der Dichtstoff eine gute Haftung auf Holz, lasiertem Holz, Aluminium und Glas aufweist. Dagegen ist die Haftung auf pulverbeschichtetem Aluminium, PVC, Polyamid, Stahl und Beton nur mäßig bis schlecht.

Der Dichtstoff weist ferner eine ungenügende Lagerstabilität in der Kartusche auf. Bereits nach 4 Wochen Lagerung bei 60°C in der Kartusche erreicht der Dichtstoff nach 7 Tagen Aushärtung an der Luft nur noch eine Shore-Härte A von 12. Außerdem zeigt der Dichtstoff nur noch eine mäßige bis schlechte Haftung auf allen Substraten.

### Vergleichsbeispiel 2:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 2,9 g | Zink-bis(2-ethylhexanoat) |
| 1,1 g | Octylphosphonsäure (Co-Katalysator) |

Der Dichtstoff hat nach Ausbringung an Luft:
- eine Hautbildungszeit von 10 min
- eine Klebfreizeit von 25 min
- eine Frühbeanspruchung nach 250 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 16
- Vergilbung des Dichtstoffs

### Vergleichsbeispiel 3:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 2,9 g | Strontium-bis(2-ethylhexanoat) |
| 1,1 g | Octylphosphonsäure (Co-Katalysator) |

Der Dichtstoff hat nach Ausbringung an Luft:
- eine Hautbildungszeit von 13 min
- eine Klebfreizeit von 30 min
- eine Frühbeanspruchung nach 360 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 17
- Vergilbung des Dichtstoffs

### Vergleichsbeispiel 4:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 2,9 g | Lithium-2-ethylhexanoat |
| 1,1 g | Octylphosphonsäure (Co-Katalysator) |

Der Dichtstoff hat nach Ausbringung an Luft:
- eine Hautbildungszeit von 13 min
- eine Klebfreizeit von 30 min
- eine Frühbeanspruchung nach 420 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 15
- Vergilbung des Dichtstoffs

### Vergleichsbeispiel 5:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 4,0 g | Zink-bis(2-ethylhexanoat) |

Der Dichtstoff hat nach Ausbringung an Luft:
- eine Hautbildungszeit von 5 min
- eine Klebfreizeit von 25 min
- eine Frühbeanspruchung nach 280 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 17
- Vergilbung des Dichtstoffs

### Vergleichsbeispiel 6:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 4,0 g | Bismut-tris(2-ethylhexanoat) |

Der Dichtstoff hat nach Ausbringung an Luft:
- eine Hautbildungszeit von 5 min
- eine Klebfreizeit von 15 min
- eine Frühbeanspruchung nach 300 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 15
- Vergilbung des Dichtstoffs

### Vergleichsbeispiel 7:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(acetonoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 4,0 g | Calcium-bis(2-ethylhexanoat) |

Der Dichtstoff hat nach Ausbringung an Luft:
- eine Hautbildungszeit von 5 min
- eine Klebfreizeit von 18 min
- eine Frühbeanspruchung nach 320 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 14
- Vergilbung des Dichtstoffs

### Vergleichsbeispiel 8:

### Dichtstoffrezeptur 2 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Vinyl-tris(ethylmethylketoximo)silan und |
| 21,0 g | Methyl-tris(ethylmethylketoximo)silan |
| 13,0 g | Haftvermittler (auf Basis von Aminoethylaminopropyltrimethoxysilan) |
| 2,0 g | Natrium(2-ethylhexanoat) |

Der Dichtstoff hat nach Ausbringung an Luft:
- eine Hautbildungszeit von 8 min
- eine Klebfreizeit von 30 min
- eine vollständige Aushärtung nach 24 h (Kerbfestigkeit)
- ein transparentes Aussehen
- eine Shore-Härte A von 23

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- Haftung ungenügend
- Shore-Härte A nach 7 Tagen an der Luft nur noch 5

Aus den Vergleichsbeispielen 1 bis 8 ist ersichtlich, dass es nicht möglich ist, mit den bekannten Zinn-freien Katalysatoren eine Dichtstoffmasse mit Oximvernetzern herzustellen, die gute Produkteigenschaften aufweist, die mit denen einer üblichen Zinn-haltigen Dichtstoffmasse (z.B. Referenzbeispiel 1) vergleichbar wären. Insbesondere weisen die mit den bekannten Zinn-freien Katalysatoren hergestellten Dichtstoffmassen eine schlechte Haftung auf vielen Materialien sowie eine ungenügende Lagerstabilität auf.

### Beispiel 3:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Ethyl-tris(ethylmethylketoximo)silan, |
| 15,0 g | Vinyl-tris(ethylmethylketoximo)silan und |
| 6,0 g | Methyl-tris(ethylmethylketoximo)silan |
| 13,0 g | Haftvermittler (auf Basis von Aminoethylaminopropyltrimethoxysilan) |
| 2,0 g | Katalysator A (aus Beispiel 1) |

Der Dichtstoff hat nach Ausbringung an Luft:
- eine Hautbildungszeit von 12 min
- eine Klebfreizeit von 23 min
- eine Frühbeanspruchung nach 180 min
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

### Beispiel 4:

### Dichtstoffrezeptur 2 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| 21,0 g | Vinyl-tris(ethylmethylketoximo)silan und |
| 21,0 g | Methyl-tris(ethylmethylketoximo)silan |
| 13,0 g | Haftvermittler (auf Basis von Aminoethylaminopropyltrimethoxysilan) |
| 2,0 g | Katalysator A (aus Beispiel 1) |

Der Dichtstoff hat nach Ausbringung an Luft:
- eine Hautbildungszeit von 10 min
- eine Klebfreizeit von 20 min
- eine Frühbeanspruchung nach 140 min
- eine vollständige Aushärtung nach 24 h (Kerbfestigkeit)
- ein transparentes Aussehen
- eine Shore-Härte A von 26

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

### Beispiel 5:

### Dichtstoffrezeptur 2 (mit Oximvernetzer)

Es werden drei beispielhafte Katalysatoren (A1 bis A3) aus Calcium-bis(2-ethylhexanoat) und Zink-bis(2-ethylhexanoat) hergestellt. Dabei beträgt das Mischungsverhältnis (Gewichtsverhältnis) von Calcium-bis(2-ethylhexanoat) zu Zink-bis(2-ethylhexanoat) 1:1 in Katalysator A1, 2:3 in Katalysator A2, und 1:3 in Katalysator A3 (A3 nicht erfindungsgemäß).

Es wird eine Siliconkautschukmischung gemäß der in Beispiel 4 beschriebenen Formulierung hergestellt, wobei anstelle von 2,0 g Katalysator A jeweils 2,0 g der Katalysatoren A1, A2, und A3 zugefügt werden.

Der Dichtstoff hat nach Ausbringung an Luft:
- eine Hautbildungszeit von 6 min (A1, A2, A3)
- eine Klebfreizeit von 30 min (A1) bzw. 25 min (A2, A3)
- eine vollständige Aushärtung nach 24 h (A1, A2, A3) (Kerbfestigkeit)
- ein transparentes Aussehen
- eine Shore-Härte A von 24 (A1) bzw. 26 (A2, A3)

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

### Beispiel 6:

### Dichtstoffrezeptur 2 (mit Oximvernetzer)

Es werden drei beispielhafte Katalysatoren (C1 bis C3) aus Natrium(2-ethylhexanoat) und Zink-bis(2-ethylhexanoat) hergestellt. Dabei beträgt das Mischungsverhältnis (Gewichtsverhältnis) von Natrium(2-ethylhexanoat) zu Zink-bis(2-ethylhexanoat) 4:1 in Katalysator C1, 2:3 in Katalysator C2, und 1:4 in Katalysator C3 (C1 nicht erfindungsgemäß).

Es wird eine Siliconkautschukmischung gemäß der in Beispiel 4 beschriebenen Formulierung hergestellt, wobei anstelle von 2,0 g Katalysator A jeweils 2,0 g der Katalysatoren C1, C2, und C3 zugefügt werden.

Der Dichtstoff hat nach Ausbringung an Luft:
- eine Hautbildungszeit von 6 min (C1, C3) bzw. 7 min (C2)
- eine Klebfreizeit von 25 min (C1, C2, C3)
- eine vollständige Aushärtung (Kerbfestigkeit)
   nach 24 h (C1, C2, C3)
- ein transparentes Aussehen
- eine Shore-Härte A von 24 (C1) bzw. 25 (C2, C3)

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

### Beispiel 7:

### Dichtstoffrezeptur 2 (mit Oximvernetzer)

Es wird eine Siliconkautschukmischung gemäß der in Beispiel 4 beschriebenen Formulierung hergestellt, wobei anstelle von 2,0 g Katalysator A 2,0 g eines Katalysators aus Kalium(2-ethylhexanoat) und Zink-bis(2-ethylhexanoat) im Verhältnis von 2:3 verwendet wird.

Der Dichtstoff hat nach Ausbringung an Luft:
- eine Hautbildungszeit von 6 min
- eine Klebfreizeit von 25 min
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

### Beispiel 8:

### Dichtstoffrezeptur 2 (mit Oximvernetzer)

Es wird eine Siliconkautschukmischung gemäß der in Beispiel 4 beschriebenen Formulierung hergestellt, wobei anstelle von 2,0 g Katalysator A 2,0 g eines Katalysators aus Lithium(2-ethylhexanoat) und Zink-bis(2-ethylhexanoat) im Verhältnis von 2:3 verwendet wird.

Der Dichtstoff hat nach Ausbringung an Luft:
- eine Hautbildungszeit von 7 min
- eine Klebfreizeit von 25 min
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Im Gegensatz zu den in den Vergleichsbeispielen 1 bis 8 hergestellten Dichtstoffen zeichnen sich die mit den erfindungsgemäßen Katalysator hergestellten Dichtstoffe mit Oximvernetzern nicht nur durch ausgezeichnete Produkteigenschaften, sondern auch durch eine ausgezeichnete Lagerstabilität aus. Die vorteilhafte Wirkung des erfindungsgemäßen Katalysators ist dabei unabhängig von der verwendeten Zusammensetzung, dem Mischungsverhältnis und von den verwendeten Vernetzern. Ein besonders vorteilhafter Katalysator umfasst Calcium-bis(2-ethylhexanoat) und Zink-bis(2-ethylhexanoat). Insbesondere wurde gefunden, dass der Katalysator A besonders gute Eigenschaften in den hergestellten Dichtstoffen hervorruft, insbesondere in Kombination mit Oximvernetzern. Auch wird ein zusätzlicher Co-Katalysator nicht benötigt.

### Vergleichsbeispiel 9:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| 28,0 g | Propyl-triacetoxysilan und |
| 12,0 g | Ethyl-triacetoxysilan |
| 5,0 g | Haftvermittler (Diacetoxy-di-tert.-butoxysilan) |
| 2,9 g | Zink-bis(2-ethylhexanoat) |
| 1,1 g | Octylphosphonsäure (Co-Katalysator) |

Der Dichtstoff hat nach Ausbringung an Luft:
- eine Hautbildungszeit von 11 min
- eine Klebfreizeit von 75 min
- eine Frühbeanspruchung nach 30 min
- eine vollständige Aushärtung nach 24 h (Kerbfestigkeit)
- ein transparentes Aussehen
- eine Shore-Härte A von 23

Weiterhin wurde gefunden, dass der Dichtstoff eine gute Haftung auf Holz, lackiertem Holz, lasiertem Holz, Aluminium, Glas, Polyamid, Stahl, etc. aufweist.

Der Dichtstoff weist jedoch eine ungenügende Lagerstabilität in der Kartusche auf.
Bereits nach 8 Wochen Lagerung bei Raumtemperatur in der Kartusche haben sich die folgenden Parameter verschlechtert:
- Klebefreizeit: 420 min
- keine Kerbfestigkeit nach 24 h an Luft
- eine Frühbeanspruchung nach 90 min

### Vergleichsbeispiel 10:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| 28,0 g | Propyl-triacetoxysilan und |
| 12,0 g | Ethyl-triacetoxysilan |
| 5,0 g | Haftvermittler (Diacetoxy-di-tert.-butoxysilan) |
| 4,0 g | Zink-bis(2-ethylhexanoat) |

Der Dichtstoff hat nach Ausbringung an Luft:
- eine Hautbildungszeit von 11 min
- eine Klebfreizeit von mehr als fünf Stunden
- eine Frühbeanspruchung nach mehr als fünf Stunden
- keine vollständige Aushärtung nach 24 h (Kerbfestigkeit)
- ein transparentes Aussehen
- eine Shore-Härte A von 22

Weiterhin wurde gefunden, dass der Dichtstoff eine gute Haftung auf Aluminium, Glas, Polyamid, Stahl, etc. aufweist.
Dagegen ist die Haftung auf Holz, lackiertem Holz und lasiertem Holz nur schlecht.

Der Dichtstoff weist ferner eine ungenügende Lagerstabilität in der Kartusche auf.
Bereits nach 4 Wochen Lagerung bei 60°C in der Kartusche haben sich die folgenden Parameter verschlechtert:
- Klebefreizeit: mehr als 48 Stunden
- keine Kerbfestigkeit nach 48 h an Luft
- eine Frühbeanspruchung nach mehr als 48 h
- Shore-Härte A nach 7 Tagen an Luft nur noch 15

### Vergleichsbeispiel 11:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| 28,0 g | Propyl-triacetoxysilan und |
| 12,0 g | Ethyl-triacetoxysilan |
| 5,0 g | Haftvermittler (Diacetoxy-di-tert.-butoxysilan) |
| 4,0 g | Bismut-tris(2-ethylhexanoat) |

Der Dichtstoff hat nach Ausbringung an Luft:
- eine Hautbildungszeit von 7 min
- eine Klebfreizeit von mehr als 5 Stunden
- eine Frühbeanspruchung nach mehr als 5 Stunden
- keine vollständige Aushärtung nach 24 h (Kerbfestigkeit)
- ein transparentes Aussehen
- eine Shore-Härte A von 21

Weiterhin wurde gefunden, dass der Dichtstoff eine gute Haftung auf Aluminium, Glas, Polyamid, Stahl, etc. aufweist.
Dagegen ist die Haftung auf Holz, lackiertem Holz und lasiertem Holz nur schlecht.

Der Dichtstoff weist ferner eine ungenügende Lagerstabilität in der Kartusche auf.
Bereits nach 4 Wochen Lagerung bei 60°C in der Kartusche haben sich die folgenden Parameter verschlechtert:
- Klebefreizeit: mehr als 48 Stunden
- keine Kerbfestigkeit nach 48 h an Luft
- eine Frühbeanspruchung nach mehr als 48 h
- Shore-Härte A nach 7 Tagen an Luft nur noch 14

### Vergleichsbeispiel 12:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| 28,0 g | Propyl-triacetoxysilan und |
| 12,0 g | Ethyl-triacetoxysilan |
| 5,0 g | Haftvermittler (Diacetoxy-di-tert.-butoxysilan) |
| 4,0 g | Calcium-bis(2-ethylhexanoat) |

Der Dichtstoff hat nach Ausbringung an Luft:
- eine Hautbildungszeit von 9 min
- eine Klebfreizeit von mehr als 5 Stunden
- eine Frühbeanspruchung nach mehr als 5 Stunden
- keine vollständige Aushärtung nach 24 h (Kerbfestigkeit)
- ein transparentes Aussehen
- eine Shore-Härte A von 23

Weiterhin wurde gefunden, dass der Dichtstoff eine gute Haftung auf Aluminium, Glas, Polyamid, Stahl, etc. aufweist.
Dagegen ist die Haftung auf Holz, lackiertem Holz und lasiertem Holz nur schlecht.

Der Dichtstoff weist ferner eine ungenügende Lagerstabilität in der Kartusche auf.
Bereits nach 4 Wochen Lagerung bei 60°C in der Kartusche haben sich die folgenden Parameter verschlechtert:
- Klebefreizeit: mehr als 48 Stunden
- keine Kerbfestigkeit nach 48 h an Luft
- eine Frühbeanspruchung nach mehr als 48 h
- Shore-Härte A nach 7 Tagen an Luft nur noch 12

### Vergleichsbeispiel 13:

### Dichtstoffrezeptur 4 (mit Acetat- und Alkoxyvernetzer)

Es wird eine Siliconkautschukmischung gemäß folgender Formulierung hergestellt:

| | |
|---|---|
| 555,0 g | α,ω-dihydroxyl-terminiertes Polydimethylsiloxan mit einer Viskosität von 80.000 cSt |
| 312,0 g | Polydimethylsiloxan mit Viskosität 100 cSt |
| 84,0 g | Hochdisperse Kieselsäure (Füllstoff) |
| 45,0 g | Vernetzermischung aus |
| 31,5 g | Methyl-triacetoxysilan, |
| 9,0 g | Propyl-triacetoxysilan und |
| 4,5 g | Methyl-trimethoxysilan |
| 2,5 g | Haftvermittler (Diacetoxy-di-tert.-butoxysilan) |
| 4,0 g | Lithium(2-ethylhexanoat) |

Der Dichtstoff hat nach Ausbringung an Luft:
- eine Hautbildungszeit von 6 min
- eine Klebfreizeit von 30 min
- eine vollständige Aushärtung nach 24 h (Kerbfestigkeit)
- ein transparentes Aussehen
- eine Shore-Härte A von 16

Weiterhin wurde gefunden, dass der Dichtstoff nur eine mäßige Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Der Dichtstoff weist ferner eine ungenügende Lagerstabilität in der Kartusche auf.
Bereits nach 4 Wochen Lagerung bei 60°C in der Kartusche erfolgt keine vollständige Aushärtung mehr. Entsprechend wird keine Haftung auf Substraten beobachtet.

### Vergleichsbeispiel 14:

### Dichtstoffrezeptur 4 (mit Acetat- und Alkoxyvernetzer)

Es wird eine Siliconkautschukmischung gemäß der in Vergleichsbeispiel 13 beschriebenen Formulierung hergestellt, wobei anstelle von 4,0 g Lithium(2-ethylhexanoat) 4,0 g Natrium(2-ethylhexanoat) als Katalysator verwendet werden.

Der Dichtstoff hat nach Ausbringung an Luft:
- eine Hautbildungszeit von 6 min
- eine Klebfreizeit von 28 min
- eine vollständige Aushärtung nach 24 h (Kerbfestigkeit)
- ein transparentes Aussehen
- eine Shore-Härte A von 1

Weiterhin wurde gefunden, dass der Dichtstoff nur eine mäßige Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Der Dichtstoff weist ferner eine ungenügende Lagerstabilität in der Kartusche auf.
Bereits nach 4 Wochen Lagerung bei 60°C in der Kartusche erfolgt keine vollständige Aushärtung mehr. Entsprechend wird keine Haftung auf Substraten beobachtet.

### Vergleichsbeispiel 15:

### Dichtstoffrezeptur 4 (mit Acetat- und Alkoxyvernetzer)

Es wird eine Siliconkautschukmischung gemäß der in Vergleichsbeispiel 13 beschriebenen Formulierung hergestellt, wobei anstelle von 4,0 g Lithium(2-ethylhexanoat) 4,0 g Kalium(2-ethylhexanoat) als Katalysator verwendet werden.

Der Dichtstoff hat nach Ausbringung an Luft:
- eine Hautbildungszeit von 5 min
- eine Klebfreizeit von 30 min
- eine vollständige Aushärtung nach 24 h (Kerbfestigkeit)
- ein transparentes Aussehen
- eine Shore-Härte A von 16

Weiterhin wurde gefunden, dass der Dichtstoff nur eine mäßige Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Der Dichtstoff weist ferner eine ungenügende Lagerstabilität in der Kartusche auf.
Bereits nach 4 Wochen Lagerung bei 60°C in der Kartusche erfolgt keine vollständige Aushärtung mehr. Entsprechend wird keine Haftung auf Substraten beobachtet.

Aus den Vergleichsbeispielen 9 bis 15 ist ersichtlich, dass es nicht möglich ist, mit den bekannten Zinn-freien Katalysatoren eine Dichtstoffmasse mit Acetatvernetzern herzustellen, die gute Produkteigenschaften aufweist, die mit denen einer üblichen Zinn-haltigen Dichtstoffmasse (z.B. Referenzbeispiel 1) vergleichbar wären. Insbesondere weisen die mit den bekannten Zinn-freien Katalysatoren hergestellten Dichtstoffmassen eine schlechte Haftung auf vielen Materialien sowie eine mangelhafte Durchhärtung auf. Darüber hinaus zeigen diese Dichtstoffe eine ungenügende Lagerstabilität.

### Beispiel 9:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| 28,0 g | Propyl-triacetoxysilan und |
| 12,0 g | Methyl-triacetoxysilan |
| 5,0 g | Haftvermittler (Diacetoxy-di-tert.-butoxysilan) |
| 4,0 g | Katalysator B (aus Beispiel 2) |

Der Dichtstoff hat nach Ausbringung an Luft:
- eine Hautbildungszeit von 12 min
- eine Klebfreizeit von 25 min
- eine Frühbeanspruchung nach 40 min
- eine vollständige Aushärtung nach 24 h (Kerbfestigkeit)
- ein transparentes Aussehen
- eine Shore-Härte A von 15

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 8 Wochen Lagerung bei 60°C in der Kartusche weist der Dichtstoff noch die gleichen Eigenschaften auf, wie bei der ersten Ausbringung.

### Beispiel 10:

### Dichtstoffrezeptur 4 (mit Acetat- und Alkoxyvernetzer)

Es wird eine Siliconkautschukmischung gemäß folgender Formulierung hergestellt:

| | |
|---|---|
| 555,0 g | α,ω-dihydroxyl-terminiertes Polydimethylsiloxan mit einer Viskosität von 80.000 cSt |
| 312,0 g | Polydimethylsiloxan mit Viskosität 100 cSt |
| 84,0 g | Hochdisperse Kieselsäure (Füllstoff) |
| 45,0 g | Vernetzermischung aus |
| 31,5 g | Methyl-triacetoxysilan, |
| 9,0 g | Propyl-triacetoxysilan und |
| 4,5 g | Methyl-trimethoxysilan |
| 2,5 g | Haftvermittler (Diacetoxy-di-tert.-butoxysilan) |
| 4,0 g | Katalysator B (aus Beispiel 2) |

Der Dichtstoff hat nach Ausbringung an Luft:
- eine Hautbildungszeit von 15 min
- eine Klebfreizeit von 27 min
- eine Frühbeanspruchung nach 40 min
- eine vollständige Aushärtung nach 24 h (Kerbfestigkeit)
- ein transparentes Aussehen
- eine Shore-Härte A von 20

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 8 Wochen Lagerung bei 60°C in der Kartusche weist der Dichtstoff noch die gleichen Eigenschaften auf, wie bei der ersten Ausbringung.

### Beispiel 11:

### Dichtstoffrezeptur 4 (mit Acetat- und Alkoxyvernetzer)

Es werden vier beispielhafte Katalysatoren (B1 bis B4) aus Bismut-tris(2-ethylhexanoat) und Zink-bis(2-ethylhexanoat) hergestellt. Dabei beträgt das Mischungsverhältnis von Bismut-tris(2-ethylhexanoat) zu Zink-bis(2-ethylhexanoat) 4:1 in Katalysator B1, 1:1 in Katalysator B2, 2:1 in Katalysator B3, und 1:4 in Katalysator B4 (B1 und B4 nicht erfindungsgemäß).

Es wird eine Siliconkautschukmischung gemäß der in Beispiel 10 beschriebenen Formulierung hergestellt, wobei anstelle von 4,0 g Katalysator B jeweils 4,0 g der Katalysatoren B1, B2, B3 und B4 zugefügt werden.

Der Dichtstoff hat nach Ausbringung an Luft:
- eine Hautbildungszeit von 8 min (B1, B2, B3, B4)
- eine Klebfreizeit von 25 min (B1, B2, B3) bzw. 45 min (B4)
- eine vollständige Aushärtung nach 24 h (Kerbfestigkeit) (B1, B2, B3, B4)
- ein transparentes Aussehen
- eine Shore-Härte A von 20 (B2, B3, B4) bzw. 21 (B1)

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 8 Wochen Lagerung bei 60°C in der Kartusche weist der Dichtstoff noch die gleichen Eigenschaften auf, wie bei der ersten Ausbringung.

### Beispiel 12: (nicht erfindungsgemäß)

Es wird eine Siliconkautschukmischung gemäß der in Beispiel 10 beschriebenen Formulierung hergestellt, wobei anstelle von 4,0 g Katalysator B 4,0 g eines Katalysators aus Bismut-tris(2-ethylhexanoat) und Natrium(2-ethylhexanoat) im Verhältnis von 2:1 verwendet wird.

Der Dichtstoff hat nach Ausbringung an Luft:
- eine Hautbildungszeit von 6 min
- eine Klebfreizeit von 23 min
- eine vollständige Aushärtung nach 24 h (Kerbfestigkeit)
- ein transparentes Aussehen
- eine Shore-Härte A von 17

### Dichtstoffrezeptur 4 (mit Acetat- und Alkoxyvernetzer)

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

### Beispiel 13: (nicht erfindungsgemäß)

### Dichtstoffrezeptur 4 (mit Acetat- und Alkoxyvernetzer)

Es wird eine Siliconkautschukmischung gemäß der in Beispiel 10 beschriebenen Formulierung hergestellt, wobei anstelle von 4,0 g Katalysator B 4,0 g eines Katalysators aus Bismut-tris(2-ethylhexanoat) und Calcium-bis(2-ethylhexanoat) im Verhältnis 1:1 verwendet wird.

Der Dichtstoff hat nach Ausbringung an Luft:
- eine Hautbildungszeit von 7 min
- eine Klebfreizeit von 32 min
- eine vollständige Aushärtung nach 24 h (Kerbfestigkeit)
- ein transparentes Aussehen
- eine Shore-Härte A von 17

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Im Gegensatz zu den in den Vergleichsbeispielen 9 bis 15 hergestellten Dichtstoffen zeichnen sich die mit den erfindungsgemäßen Katalysator hergestellten Dichtstoffe mit Acetatvernetzern bzw. Acetat- und Alkoholatvernetzern der Beispiele 9 bis 13 nicht nur durch ausgezeichnete Produkteigenschaften, sondern auch durch eine ausgezeichnete Lagerstabilität aus. Die vorteilhafte Wirkung des erfindungsgemäßen Katalysators ist dabei unabhängig von der verwendeten Zusammensetzung, dem Mischungsverhältnis und von den verwendeten Vernetzern. Ein besonders vorteilhafter Katalysator umfasst Bismut-tris(2-Ethylhexanoat) und Zink-bis(2-Ethylhexanoat). Insbesondere wurde gefunden, dass der Katalysator B besonders gute Eigenschaften in den hergestellten Dichtstoffen hervorruft, insbesondere in Kombination mit Acetatvernetzer.

Auch wird ein zusätzlicher Co-Katalysator nicht benötigt.

## Patentansprüche

1. Zusammensetzung, umfassend
mindestens eine Organosiliconverbindung,
mindestens einen Vernetzer, und
einen Katalysator, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst und
das Verhältnis der Anzahl der Zinkatome des Zinksalzes einer Carbonsäure zu der Anzahl der Metallatome des Metallsalzes einer Carbonsäure von 2:1 bis 1:2 beträgt.

2. Zusammensetzung nach Anspruch 1, **dadurch gekennzeichnet, dass** das Verhältnis der Anzahl der Zinkatome des Zinksalzes einer Carbonsäure zu der Anzahl der Metallatome des Metallsalzes einer Carbonsäure von 1,3:1 bis 1:1,3 beträgt.

3. Zusammensetzung nach einem der vorherigen Ansprüche, **dadurch gekennzeichnet, dass** sie Calcium-bis(2-ethylhexanoat) und Zink-bis(2-ethylhexanoat) umfasst, vorzugsweise in einem Zahlenverhältnis von 1,3:1 bis 1:1,3, oder
**dadurch gekennzeichnet, dass** sie Bismut-tris(2-ethylhexanoat) und Zink-bis(2-ethylhexanoat) umfasst, vorzugsweise in einem Zahlenverhältnis von 1,3:1 bis 1:1,3, oder
**dadurch gekennzeichnet, dass** sie Natrium(2-ethylhexanoat) und Zink-bis(2-ethylhexanoat) umfasst, vorzugsweise in einem Zahlenverhältnis von 1,3:1 bis 1:1,3.

4. Zusammensetzung nach einem der vorherigen Ansprüche, **dadurch gekennzeichnet, dass** die Organosiliconverbindung eine α, w-dihydroxyl-terminierte Polyorganosiloxanverbindung ist, insbesondere ein α, w-dihydroxyl-terminiertes Polydialkylsiloxan.

5. Zusammensetzung nach einem der vorherigen Ansprüche, **dadurch gekennzeichnet, dass** der Vernetzer mindestens eine Verbindung umfasst, die aus der Gruppe ausgewählt wird, die aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isopropyl-Ketoxim-Gruppen, besteht.

6. Zusammensetzung nach einem der vorherigen Ansprüche, **dadurch gekennzeichnet, dass** der Vernetzer mindestens eine Silanverbindung mit Acetatresten und eine Silanverbindung mit Akoxyresten umfasst.

7. Zusammensetzung nach einem der vorherigen Ansprüche, **dadurch gekennzeichnet, dass** sie 40 bis 90 Gew.-% der Organosiliconverbindung, 1 bis 15 Gew.-% des Vernetzers, und 0,1 bis 5,0 Gew.-% des Katalysators nach einem der Ansprüche 1 bis 10 umfasst.

8. Verwendung einer Zusammensetzung nach einem der vorherigen Ansprüche zur Herstellung einer Siliconkautschukmasse, insbesondere zur Verwendung als Dichtungsmittel, Klebstoff oder Beschichtungsmittel.

9. Verwendung eines Katalysators zum Vernetzen einer Siliconkautschukmasse, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst, **dadurch gekennzeichnet, dass** der Katalysator Calcium-bis(2-ethylhexanoat) und Zink-bis(2-ethylhexanoat) umfasst, vorzugsweise in einem Zahlenverhältnis von 1,3:1 bis 1:1,3, oder
**dadurch gekennzeichnet, dass** der Katalysator Bismut-tris(2-ethylhexanoat) und Zink-bis(2-ethylhexanoat) umfasst, vorzugsweise in einem Zahlenverhältnis von 1,3:1 bis 1 :1,3, oder
**dadurch gekennzeichnet, dass** der Katalysator Natrium(2-ethylhexanoat) und Zink-bis(2ethylhexanoat) umfasst, vorzugsweise in einem Zahlenverhältnis von 1,3:1 bis 1:1,3.

10. Verwendung nach Anspruch 9, **dadurch gekennzeichnet, dass** die Siliconkautschukmasse mindestens eine Organosiliconverbindung umfasst, die eine α, w-dihydroxyl-terminierte Polyorganosiloxanverbindung ist, insbesondere ein α, ω-dihydroxyl-terminiertes Polydialkylsiloxan.

11. Verwendung nach Anspruch 9 oder 10, **dadurch gekennzeichnet, dass** die Siliconkautschukmasse mindestens einen Vernetzer umfasst, wobei der Vernetzer mindestens eine Verbindung umfasst, die aus der Gruppe ausgewählt wird, die aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isopropyl-Ketoxim-Gruppen, besteht.

## Claims

1. Composition comprising
at least one organosilicone compound,
at least one crosslinker, and
a catalyst, wherein the catalyst comprises a metal salt of a carboxylic acid which is a zinc salt of one or more branched saturated carboxylic acids having six to nineteen carbon atoms, and a metal salt of a carboxylic acid selected from a bismuth salt, a calcium salt, a potassium salt, a lithium salt, a magnesium salt and a sodium salt, each salt of one or more branched saturated carboxylic acids having six to nineteen carbon atoms and
the ratio of the number of zinc atoms in the zinc salt of a carboxylic acid to the number of metal atoms in the metal salt of a carboxylic acid is from 2:1 to 1:2.

2. Composition according to claim 1, **characterized in that** the ratio of the number of zinc atoms of the zinc salt of a carboxylic acid to the number of metal atoms of the metal salt of a carboxylic acid is from 1.3:1 to 1:1.3.

3. Composition according to any of the preceding claims, **characterized in that** it comprises calcium bis(2-ethylhexanoate) and zinc bis(2-ethylhexanoate), preferably in a numerical ratio of 1.3:1 to 1:1.3, or
**characterized in that** they contain bismuth tris(2-ethylhexanoate) and zinc bis(2-ethylhexanoate), preferably in a numerical ratio of 1.3:1 to 1:1.3, or **characterized in that** it comprises sodium (2-ethylhexanoate) and zinc bis(2-ethylhexanoate), preferably in a numerical ratio of 1.3:1 to 1:1.3.

4. Composition according to any of the preceding claims, **characterized in that** the organosilicone compound is a α,ω-dihydroxy terminated polyorgano siloxane compound, in particular a α,ω-dihydroxy terminated polydialkyl siloxane.

5. Composition according to any one of the preceding claims, **characterized in that** the crosslinker comprises at least one compound selected from the group consisting of silane compounds comprising acid residues, in particular silane compounds containing acetate residues, and silane compounds, which comprise oxime residues, in particular silane compounds with acetone oxime groups, silane compounds with methyl ethyl ketoxime groups, silane compounds with methyl propyl ketoxime groups, silane compounds with methyl isobutyl ketoxime groups and/or silane compounds with methyl isopropyl ketoxime groups.

6. Composition according to any of the preceding claims, **characterized in that** the crosslinker comprises at least one silane compound containing acetate residues and one silane compound containing alkoxy residues.

7. Composition according to any of the preceding claims, **characterized in that** it comprises 40 to 90 wt.-% of the organosilicone compound, 1 to 15 wt.-% of the crosslinker, and 0.1 to 5.0 wt.-% of the catalyst according to any of claims 1 to 10.

8. Use of a composition according to any one of the preceding claims for the preparation of a silicone rubber mass, in particular for use as a sealant, adhesive or coating agent.

9. Use of a catalyst for crosslinking a silicone rubber mass, wherein the catalyst comprises a metal salt of a carboxylic acid which is a zinc salt of one or more branched saturated carboxylic acids having from six to nineteen carbon atoms, and a metal salt of a carboxylic acid selected from a bismuth salt, a calcium salt, a potassium salt, a lithium salt, a magnesium salt and a sodium salt each of one or more branched saturated carboxylic acids having from six to nineteen carbon atoms, **characterized in that** the catalyst comprises calcium bis(2-ethylhexanoate) and zinc bis(2-ethylhexanoate), preferably in a numerical ratio of 1.3:1 to 1:1.3, or
**characterized in that** the catalyst comprises bismuth tris(2-ethylhexanoate) and zinc bis(2-ethylhexanoate), preferably in a numerical ratio of 1.3:1 to 1:1.3, or
**characterized in that** the catalyst comprises sodium (2-ethylhexanoate) and zinc bis(2-ethylhexanoate), preferably in a numerical ratio of 1.3:1 to 1:1.3.

10. Use according to claim 9, **characterized in that** the silicone rubber mass comprises at least one organosilicone compound which is a α,ω-dihydroxy terminated polyorganosiloxane compound, in particular a α,ω-dihydroxy terminated polydialkylsiloxane.

11. Use according to claim 9 or 10, **characterized in that** the silicone rubber mass comprises at least one crosslinker, wherein the crosslinker comprises at least one compound selected from the group consisting of silane compounds comprising acid radicals, in particular silane compounds comprising acetate radicals, and silane compounds comprising oxime radicals, in particular silane compounds having acetone oxime groups, silane compounds having methyl ethyl ketoxime groups, silane compounds having methyl propyl ketoxime groups, silane compounds having methyl isobutyl ketoxime groups and/or silane compounds having methyl isopropyl ketoxime groups.

## Revendications

1. Composition, comprenant :
au moins un composé organosilicié,
au moins un agent réticulant, et
un catalyseur, le catalyseur comprenant un sel métallique d'un acide carboxylique qui est un sel de zinc d'un ou plusieurs acides carboxyliques saturés ramifiés ayant six à dix-neuf atomes de carbone, et un sel métallique d'un acide carboxylique qui est choisi parmi un sel de bismuth, un sel de calcium, un sel de potassium, un sel de lithium, un sel de magnésium et un sel de sodium, chacun d'un ou plusieurs acides carboxyliques saturés ramifiés ayant six à dix-neuf atomes de carbone, et
le rapport du nombre d'atomes de zinc du sel de zinc d'un acide carboxylique sur le nombre d'atomes de métal du sel métallique d'un acide carboxylique est de 2:1 à 1:2.

2. Composition selon la revendication 1, **caractérisée en ce que** le rapport du nombre d'atomes de zinc du sel de zinc d'un acide carboxylique sur le nombre d'atomes de métal du sel métallique d'un acide carboxylique est de 1,3:1 à 1:1,3,

3. Composition selon l'une des revendications précédentes, **caractérisée en ce qu'**elle comprend du bis(2-éthylhexanoate) de calcium et du bis(2-éthylhexanoate) de zinc, de préférence dans un rapport numérique de 1,3:1 à 1:1,3, ou
**caractérisée en ce qu'**elle comprend du tris(2-éthylhexanoate) de bismuth et du bis(2-éthylhexanoate) de zinc, de préférence dans un rapport numérique de 1,3:1 à 1:1,3, ou
**caractérisée en ce qu'**elle comprend du 2-éthylhexanoate de sodium et du bis(2-éthylhexanoate) de zinc, de préférence dans un rapport numérique de 1,3:1 à 1:1,3,

4. Composition selon l'une des revendications précédentes, **caractérisée en ce que** le composé organosilicié est un composé polyorganosiloxane à terminaison α, ω-dihydroxyle, en particulier un polydialkylsiloxane à terminaison α, ω-dihydroxyle.

5. Composition selon l'une des revendications précédentes, **caractérisée en ce que** l'agent réticulant comprend au moins un composé choisi dans le groupe constitué par les composés silane qui comprennent des radicaux acides, en particulier les composés silane avec des radicaux acétate et les composés silane qui comprennent des radicaux oxime, en particulier les composés silane avec des groupes acétone oxime, les composés silane avec des groupes méthyléthylcétoxime, les composés silane avec des groupes méthylpropylcétoxime, les composés silane avec des groupes méthylisobutylcétoxime et/ou les composés silane avec des groupes méthylisopropylcétoxime.

6. Composition selon l'une des revendications précédentes, **caractérisée en ce que** l'agent réticulant comprend au moins un composé silane avec des radicaux acétate et un composé silane avec des radicaux alcoxy.

7. Composition selon l'une des revendications précédentes, **caractérisée en ce qu'**elle comprend 40 à 90 % en poids du composé organosilicié, 1 à 15 % en poids de l'agent réticulant et 0,1 à 5,0 % en poids du catalyseur selon l'une des revendications 1 à 10.

8. Utilisation d'une composition selon l'une des revendications précédentes pour la préparation d'une masse de caoutchouc de silicone, en particulier pour une utilisation comme produit d'étanchéité, adhésif ou produit de revêtement.

9. Utilisation d'un catalyseur pour réticuler une masse de caoutchouc de silicone, le catalyseur comprenant un sel métallique d'un acide carboxylique qui est un sel de zinc d'un ou plusieurs acides carboxyliques saturés ramifiés ayant six à dix-neuf atomes de carbone, et un sel métallique d'un acide carboxylique qui est choisi parmi un sel de bismuth, un sel de calcium, un sel de potassium, un sel de lithium, un sel de magnésium et un sel de sodium, chacun d'un ou plusieurs acides carboxyliques saturés ramifiés ayant six à dix-neuf atomes de carbone, **caractérisée en ce que** le catalyseur comprend du bis(2-éthylhexanoate) de calcium et du bis(2-éthylhexanoate) de zinc, de préférence dans un rapport numérique de 1,3:1 à 1:1,3, ou
**caractérisée en ce que** le catalyseur comprend du tris(2-éthylhexanoate) de bismuth et du bis(2-éthylhexanoate) de zinc, de préférence dans un rapport numérique de 1,3:1 à 1:1,3, ou
**caractérisée en ce que** le catalyseur comprend du 2-éthylhexanoate de sodium et du bis(2-éthylhexanoate) de zinc, de préférence dans un rapport numérique de 1,3:1 à 1:1,3.

10. Utilisation selon la revendication 9, **caractérisée en ce que** la masse de caoutchouc de silicone comprend au moins un composé organosilicié qui est un composé polyorganosiloxane à terminaison α, ω-dihydroxyle, en particulier un polydialkylsiloxane à terminaison α, ω-dihydroxyle.

11. Utilisation selon la revendication 9 ou 10, **caractérisée en ce que** la masse de caoutchouc de silicone comprend au moins un agent réticulant, l'agent réticulant comprenant au moins un composé choisi dans le groupe constitué par les composés silane qui comprennent des radicaux acides, en particulier les composés silane avec des radicaux acétate et les composés silane qui comprennent des radicaux oxime, en particulier les composés silane avec des groupes acétone oxime, les composés silane avec des groupes méthyléthylcétoxime, les composés silane avec des groupes méthylpropylcétoxime, les composés silane avec des groupes méthylisobutylcétoxime et/ou les composés silane avec des groupes méthylisopropylcétoxime.
